# EUROPEAN PATENT SPECIFICATION

(11) **EP 1 824 360 B1**
(45) Date of publication and mention of the grant of the patent: **19.11.2014**
(21) Application number: 05798483.3
(22) Date of filing: 26.10.2005
(51) Int. Cl.: A47C 23/18, A47C 23/24, A47C 23/26

(54) **AN ARRANGEMENT FOR SUPPORTING A PERSON OR ANIMAL**
ANORDNUNG ZUM STÜTZEN EINER PERSON ODER EINES TIERS
AGENCEMENT POUR SOUTENIR UNE PERSONNE OU UN ANIMAL

(30) Priority: 02.11.2004 GB 0424264
(43) Date of publication of application: 29.08.2007
(73) Proprietor: PurFlo Limited, Kingswinford West Midlands DY6 7UZ (GB)
(72) Inventor: FUSCONE, Roy, Maidenhead, Berkshire SL6 8DS (GB); WHALE, Paul, William, Halesowen, West Midlands B63 4HH (GB); WILLIAMS, Martin, Jowsey, Guernsey, Channel Islands G77 9HH (GB)
(86) International application number: PCT/GB2005/004154
(87) International publication number: WO 2006/048612

(56) References cited:
- EP-A- 0 275 718
- FR-A- 2 657 528
- GB-A- 190 929 817
- US-A- 4 730 356
- US-A- 5 699 571

## Description

**THE PRESENT INVENTION** relates to an arrangement for supporting a person or animal and, more particularly, relates to a bed structure.

It has been proposed previously to provide a child safety mattress in which an elasticated, permeable membrane is stretched tightly over a frame in order to provide a sleeping surface to support a child or infant. One such arrangement is described and illustrated in WO 97/29667, in which an elasticated cover in the form of a sock or sheath is pulled tightly over a box frame in order that one surface of the elasticated cover can serve as a sleeping surface to support a small child or baby.

Child safety mattresses of the type described above have been found to offer significant advantages over more common mattresses which are typically stuffed with foam to provide a soft sleeping surface. For example, because the elasticated membrane of the above mentioned child safety mattress is substantially permeable to fluids, it enables a small child or baby to breathe through the mattress even when lying face down. The porous membrane, which is raised above the bottom of the structure allows a flow of air through the child safety mattress, thereby preventing overheating of a baby sleeping on the mattress and also preventing the baby from re-breathing carbon dioxide which would otherwise pool at the sleeping surface of a conventional mattress.

Also, because the sleeping membrane is permeable and configured to support a person above a void, and is also conveniently removable and launderable, the above described child safety mattress does not provide a suitable habitat for household dust mites or a silo for the allergens their droppings might produce, bacteria or moulds.

This type of child safety mattress therefore addresses risks associated with sudden infant death syndrome and also risks associated with allergens, bacteria, moulds, etc. such as asthma, eczema, rhinitis, etc. However it has been thought that many of the benefits which come from using the above mentioned child safety mattress could also offer significant benefits to the health and well being of larger children and even fully grown adults and so it has been thought that it would be advantageous to provide larger beds, for example full size adult single beds or even double beds, which provide a substantially permeable membrane on which a larger child or adult could sleep. Such an arrangement could be particularly useful as a hospital bed as it is thought that a very thin supporting porous and launderable membrane could prevent the risk of cross infection between patients and the risk of patients contracting MRSA (methicillin resistant staphylococcus auraus) which is currently a significant concern in the medical field. It is also thought that beds of this general type could prove useful in treating burns and relieving pressure on patients' bodies, and could possibly be of benefit to older children suffering from asthma, because of the reduced likelihood of the mattress serving as a likely habitat for dust mites.

However, it is not practicable simply to use a larger version of the mattress arrangement disclosed in WO 97/29667 for use by adults. For example, whilst the "sock" or "sheath" arrangement illustrated in WO 97/29667 can be very convenient for a small child's mattress, by allowing relatively easy removal of the sock or sheet from the underlying frame for laundering, etc., such procedures become significantly more difficult when the mattress is scaled up to a suitable size for use by an adult. Furthermore, the sheer size of the resulting frame structure for an adult sized mattress has been found to provide problems ensuring sufficient tension across the upper layer of the membrane in order to support the significantly increased weight of an adult when compared to the weight of a small child or baby.

GB190929817 discloses a spring mattress comprising a sheet attached at one end to a tensioning-roller, the other end passing over a roller and being secured through ropes to springs arranged underneath. However, this arrangement suffers the disadvantage, that the sheet can be stretched downwardly under a relatively heavy load and impinge upon the ropes underneath.

It is therefore an object of the present invention to provide an improved arrangement for supporting a person, or even an animal.

Accordingly, the present invention provides an arrangement for supporting a person or animal as claimed in claim 1 of the claims.

Other features of the invention are as defined in the dependent claims.

So that the invention may be more readily understood, and so that further features thereof may be appreciated, embodiments of the invention will now be described, by way of example, with reference to the accompanying drawings, in which:
FIGURE 1 is a perspective view from above and one end of a part of a support structure forming part of the present invention;
FIGURE 2 is a perspective view from above and one end of a flexible membrane forming part of the present invention;
FIGURE 3 is a perspective view corresponding generally to that of Figure 1, but illustrating the supporting membrane in position over the support structure.
FIGURE 4 is a schematic elevational view of the arrangement illustrated in Figure 3, from one end, illustrating the supporting membrane and supporting structure; and
FIGURE 5 is a view corresponding generally to that of Figure 4, but illustrating an tether configuration not according to the invention.

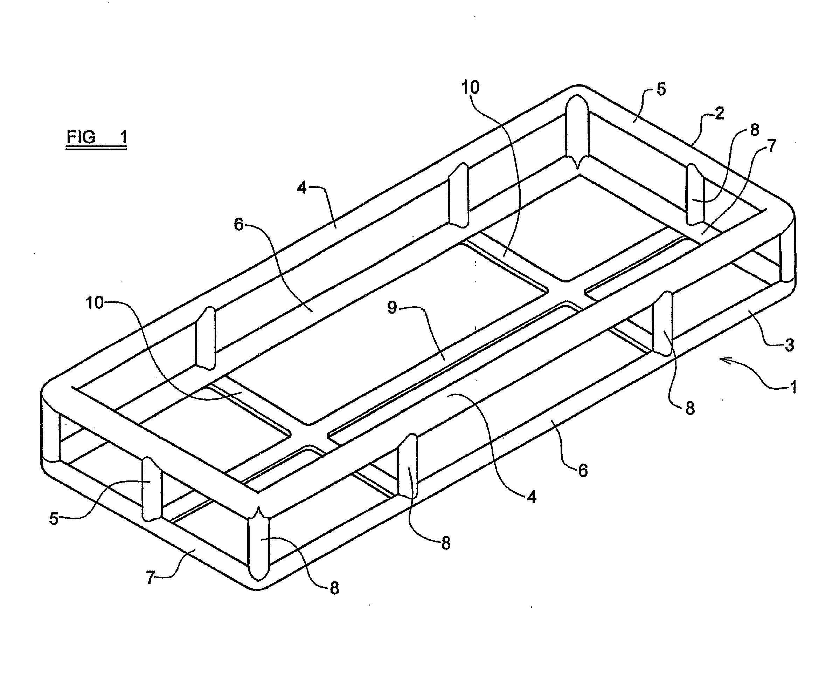

Referring initially to Figure 1, there is illustrated a support structure 1 which forms part of a bed in accordance with the present invention. The support structure 1 takes the form of a generally rectangular box structure and comprises a first peripheral frame 2 which is spaced above a second, lower peripheral frame 3.

The first peripheral frame 2 is generally rectangular in configuration and comprises a pair of elongate side rails 4 which are interconnected at their ends by a pair of elongate end rails 5, the end rails 5 being shorter than the side rails 4.

The second peripheral frame 3 of the supporting structure illustrated has substantially the same overall size and shape as the first peripheral frame 2, and again is defined by a pair of elongate side rails 6 which are interconnected at their ends by a pair of elongate end rails 7, the end rails 7 being shorter than the side rails 6.

In the supporting structure illustrated, the two rectangular frames 2,3 are connected together in spaced-apart relation, with the first frame 2 being located above the second frame 3, by a plurality of substantially rigid support posts 8. It will be seen that a support post 8 extends between each corner of the lower frame 3 and a respective corner of the upper frame 2, but that other support posts 8 also extend between the aligned side rails 4,6 and the aligned end rails 5,7 of the two frames. However, it should be appreciated that, in variants of the invention, the support posts 8 may be provided at different locations. For example, it is envisaged that certain variants of the invention may not be provided with support posts 8 at the corner regions of the support structure 1, but instead could rely only upon posts 8 provided along the side and end edges of the support structure.

The lower rectangular frame 3 of the preferred support structure 1 is provided with a substantially central longitudinal reinforcing rib 9, which extends between the two end rails 7 of the lower frame 3. The lower frame 3 is also provided with a pair of spaced apart transverse reinforcing ribs which extend between the two side rails 6 of the lower frame 3. In the supporting structure illustrated, the three reinforcing ribs 9, 10 each meet a respective side or end rail 7 at the same point as a respective support post 8. However, it should be noted that the upper rectangular frame 2 is not provided with any such reinforcing ribs and so simply takes the form of a rectangular frame with no cross members.

As illustrated in Figure 1, the corners of the rectangular support structure 1, which takes the form of a rectangular box, are rounded or chamfered. However, this feature is not essential to the present invention, and in variants of the invention the corners of the support structure may not be rounded to this degree.

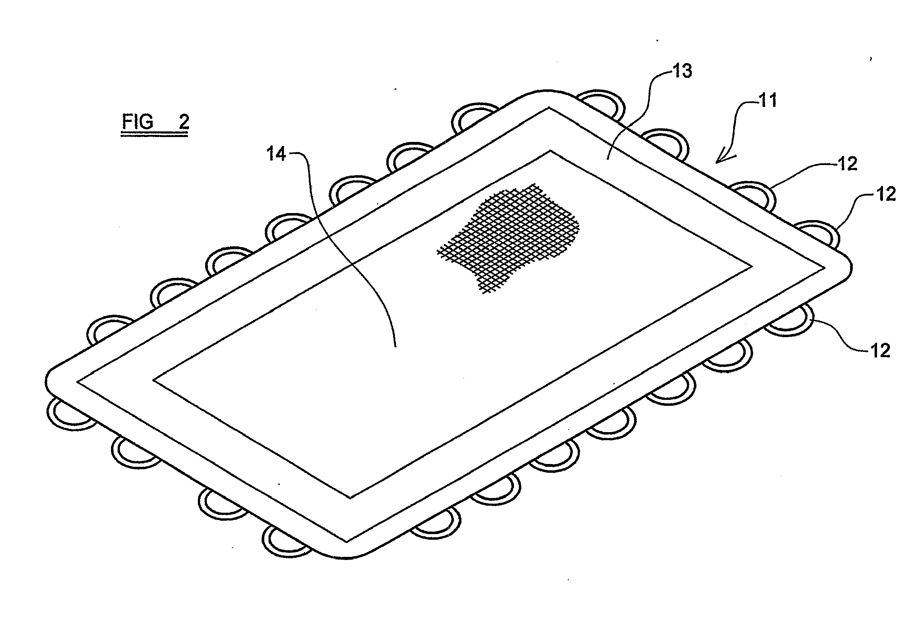

Figure 2 illustrates a flexible membrane which is intended to be drawn tightly over the upper frame 2 of a support structure 1 illustrated in Figure 1, as will be described in more detail hereinafter.

The flexible membrane 2 has a generally rectangular configuration and is sized so as to have dimensions greater than those of the upper rectangular frame 2 illustrated in Figure 1, whilst having a generally similar aspect ratio. In the arrangement illustrated in Figure 2, the corners of the rectangular membrane are slightly rounded, although in other variants, the corners may not be rounded.

Along each edge of the flexible membrane 11, there are provided a plurality of securing loops 12 each of which extends outwardly from the edge of the membrane 11. Each of the securing loops 12 is designed to be attached to one end of a tether in a manner which will be described in more detail hereinafter.

Spaced slightly inwards from each edge of the membrane 11, there is provided an integral padded region 13 of generally rectangular form which defines the outer periphery of a central support region 14 of the membrane 11.

The flexible membrane 11 is substantially permeable, at least in the central region 14, so as to allow the passage of liquid and gases, such as air, through the central region 14 of the membrane 11.

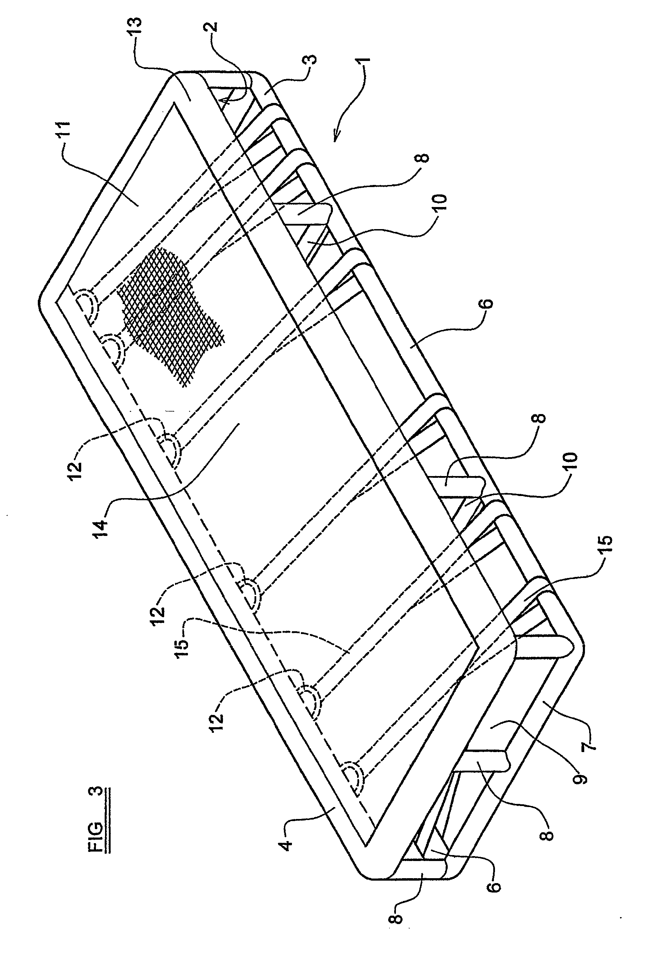

Figure 3 shows the membrane 11 in position on top of the support structure 1, such that the membrane 11 is stretched across and partially around the upper rectangular frame 2 of the support structure 1. In this position, the rectangular padded region 13 of the membrane 11 contacts the upper rectangular frame 2 of the support structure 1 with a result that the membrane is effectively padded in regions where the membrane passes over and around the upper frame 2.

In the position illustrated in Figure 3, the edge regions of the membrane 11, which extend outside the rectangular padded region 13, are pulled underneath the respective rails 4,5 of the upper frame 2 such that the securing loops 12 lie below the rails. Tethers 15 are connected to each securing loop 12 and extend downwardly, and across the support structure 1 so as to be anchored to the opposing rail of the lower frame 3, at a position below the level of the upper frame 2. For example, the tethers 15 illustrated in phantom in Figure 3 all extend from respective securing loops 12 which are positioned below the left hand side rail 4 of the upper frame 2. These tethers 15 each extend underneath the membrane 11 and slightly downwardly and are anchored to the opposing side rails 6 on the right hand side of the lower frame 3. In a similar manner, the tethers 15 secured to the right hand edge of the membrane 11 illustrated in Figure 3 also extend underneath the membrane 11 and downwardly towards the opposing side rail 5 on the left hand side of the lower frame 3. Also, the tethers secured to the shorter end edges of the membrane 11 extend underneath the membrane 11 and are tethered to the lower end rail 7 of the lower frame 3 (not actually shown in Figure 3 for the sake of clarity).

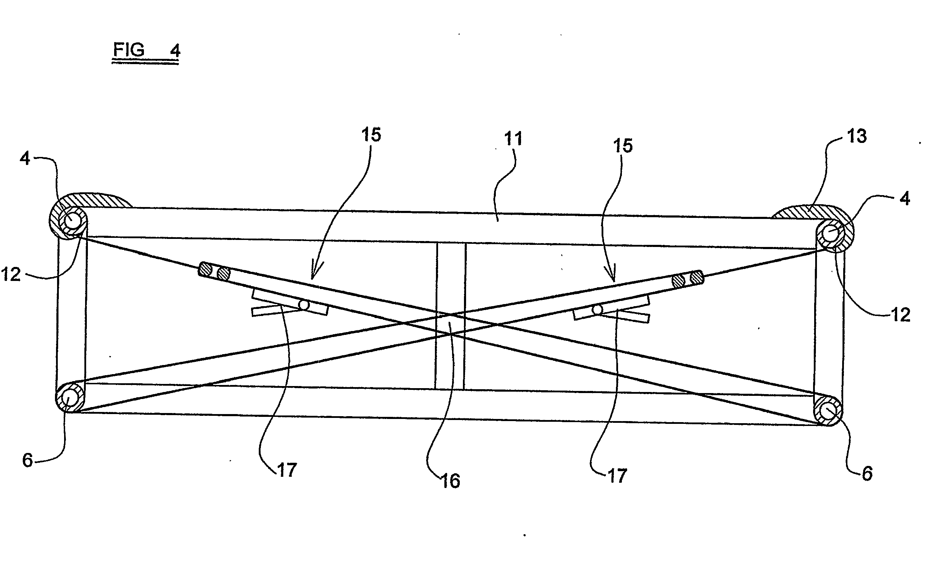

Figure 4 is an end elevational view of the arrangement shown in Figure 3, and this drawing clearly shows that the rectangular padded region 13 of the membrane lilies over the rails defining the upper frame 2, thereby providing protection to a person lying on the membrane 11, from injury by contact with the upper frame 2.

Figure 4 also clearly illustrates that the tethers 15 attached to respective side edges of the membrane 11 extend diagonally across the box supporting structure 1 so as to cross over in a central region indicated generally at 16, beneath the level of the supporting membrane 11.

The tethers 15 can, in practice, take one of a number of different forms.

For example, it is envisaged that in certain embodiments, the tethers 15 may be elastic, and that in other embodiments, the tethers may take the form of webbing straps with little or no elasticity. Also, it is envisaged that the tethers may each be provided with a tensioning device such as ratchet arrangement 17 illustrated schematically in Figure 4. Also, tensioning devices in the form of conventional buckles could be provided for use with tethers in the form of webbing straps. It is even envisaged that the tethers 15 may be part elastic and part webbing strap.

In view of the foregoing description, it should be appreciated that, in the supporting structure described and illustrated, the lower rectangular frame 3 serves an anchoring function for each tether 15 and hence can be considered to represent an anchor-region of the overall support structure 1. This anchor-region of the support structure 1 is located substantially lower than the upper peripheral rectangular frame 2 when the bed is in use.

However, in variants of the invention according to claim 1, it is envisaged that the anchor region of the support structure 1 may take other convenient forms, rather than the rectangular frame 3 illustrated and described above.

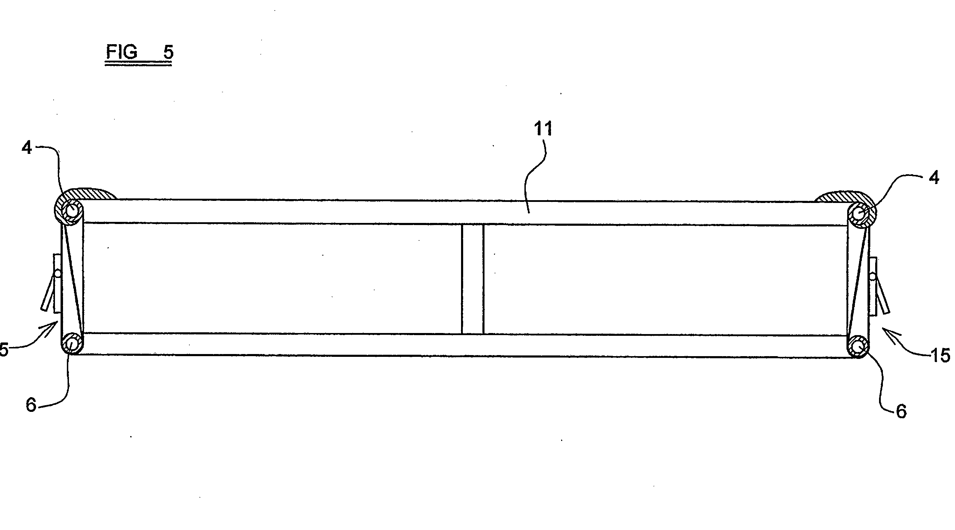

Figure 5 illustrates one possible alternative configuration not according to the invention, for the tethers 15. In this configuration, it will be seen that the tethers 15, rather than extending below the membrane 11 so as to pass diagonally across the box-like structure 1, actually simply extend substantially vertically downwardly from the general region of the upper rails 4 so as to be anchored around the lower rails 6 therebelow. However, it should be appreciated that in both the arrangement illustrated in Figure 4, and the arrangement illustrated in Figure 5, the anchor-region of the support structure 1 is located below the level of the upper frame 2, such that the tethers 15 extend generally downwardly from the membrane 11 and are anchored to the support structure 1 at a position below the level of the membrane 11. It is thought that this feature is important in order to ensure sufficient length of tethers to provide ability to tension the membrane 11 so as to support the weight of one or more adult persons lying on the membrane 11.

In preferred embodiments of the present invention according to claim 1, the membrane 11 is elasticated in order to ensure that the membrane will return back to its initial position in which it is drawn tightly across the upper frame 2 after removal of load from the supporting surface of the membrane 11. Of course, the membrane 11 is also preferably made from fire retardant material.

It is also preferred for the various rails and posts of the support structure 1 to be formed from plastics materials, metals or wood, and for them to be provided with substantially non-toxic finishes, preferably of food grade.

It is envisaged that the overall arrangement could be provided in the form of a kit of parts to enable a user to conveniently construct the bed after purchase of the kit, and to allow subsequent dis-assembly and subsequent reassembly as convenient.

The above described support arrangement, preferably in the form of a bed, is intended adequately to support grown adults during sleep, or hospital treatment, whilst allowing a flow of air around and underneath the supporting membrane 11, and also allowing for any discharged fluids to conveniently drain away from the person, through the membrane and out of harmful contact with the person.

It is envisaged that variants of the bed structure described above could comprise upper and lower peripheral frames 2,3 of differing sizes. One possible variant could utilise a lower frame, defining the anchor-region of the support structure 1, having greater dimensions than that of the upper frame 2. It is thought that such an arrangement may provide improved tensioning of the membrane 11 because of the resulting increase in effective length for each tether 15.

It should be appreciated that the present invention according to claim 1 is not intended solely for use as a bed nor solely for use by adults. Indeed the invention can take any convenient size and could even be used to support animals.

As will be appreciated, if the supporting structure described above and illustrated in particular in figures 3 and 4 is used to support a particularly heavy person, then it is possible that the supporting membrane may become stretched downwardly to such a degree that the membrane impinges on and bears against one or more of the tethers extending diagonally beneath the membrane. This could adversely affect the tensioning function of the tethers whilst also, possibly, being uncomfortable for a person supported by the membrane. It is therefore envisaged that an embodiment of the invention according to claim 1 is provided with some form of intermediate structure between the supporting membrane and the tethers extending there below. In its simplest form, this intermediate structure could take the form of a further frame arrangement, positioned between the above-mentioned first and second frames of the support structure and serving simply to prevent the supporting membrane being allowed to come into contact with and bear against the underlying tethers.

However, other arrangements could provide different types of intermediate structure, for example some form of barrier configured not only to prevent the supporting membrane from coming into contact with the underlying tethers, but also providing a profile to which the downwardly stretched membrane can conform so as to provide a comfortable support to a particularly heavy person using the arrangement.

Although the support posts 8 of the above-described supporting structure are substantially rigid, it is envisaged that variants may be provided with posts which are compressible, or elastically deformable.

In other variants of the above-described membrane, the padding 13 may be provided on the peripheral frame, rather than integrally on the membrane.

In the present Specification "comprises" means "includes or consists of and "comprising" means "including or consisting of.

## Claims

1. An arrangement for supporting a person or animal, the arrangement comprising: a support structure (1) and a flexible membrane (11); the support structure comprising at least a first peripheral frame (2) and an anchor-region (3); the anchor-region being located substantially lower than said first peripheral frame when in use; wherein said membrane has dimensions greater than said first peripheral frame and is drawn across and at least partially around said frame so as to define a support surface within the periphery of the frame, at least the region (14) of the membrane defining said support surface being substantially permeable; the arrangement further comprising a plurality of tethers (15), each tether extending between a part of said anchor-region and a respective position substantially at the edge of said membrane so as to retain said membrane in position across said frame with sufficient tension to support a person, wherein at least some of said tethers extend from one region of the membrane to a part of said anchor region located substantially below an opposed region of the membrane such that said tethers each pass underneath the membrane, **characterised in that** the arrangement further comprises an intermediate structure positioned between the membrane and the tethers for preventing the membrane when stretched downwardly from impinging on and bearing against one or more of the tethers extending diagonally beneath the membrane.

2. An arrangement for supporting a person or animal according to claim 1, wherein said support structure comprises a second peripheral frame (3) defining said anchor-region, the intermediate structure further being in the form of a frame arrangement positioned between the first and second peripheral frames.

3. An arrangement for supporting a person or animal according to claims 1 or 2, wherein said membrane is provided with padding in regions (13) where said membrane passes over and around said first peripheral frame.

4. An arrangement for supporting a person or animal according to claims 1 or 2, wherein said first peripheral frame is provided with padding (13) in regions where said membrane passes over and around the first peripheral frame.

5. An arrangement for supporting a person or animal according to any of the preceding claims, wherein said first peripheral frame is substantially rectangular.

6. An arrangement for supporting a person or animal according to claim 2 or any claim dependent thereon, or claim 5 or any claim dependent thereon, wherein said first and second frames are connected together in spaced-apart relation by a plurality of support posts (8).

7. An arrangement for supporting a person or animal according to claim 2 or any claim dependent thereon, or claim 5 or any claim dependent thereon, wherein said first and second frames are of substantially identical external shape and size.

8. An arrangement for supporting a person or animal according to any preceding claim, wherein said tethers are elasticated.

9. An arrangement for supporting a person or animal according to any preceding claim, wherein one or more of said tethers is provided with a tensioning device (17).

10. An arrangement for supporting a person or animal according to claim 9, wherein the or each said tensioning device comprises a ratchet arrangement (17).

11. An arrangement for supporting a person or animal according to claim 9, wherein the or each said tensioning device comprises a buckle.

12. An arrangement for supporting a person or animal according to any preceding claim, wherein said membrane is elasticated.

13. An arrangement for supporting a per son or animal according to any preceding claim, wherein said membrane is provided with a plurality of securing loops (12) for attachment to respective tethers.

14. An arrangement for supporting a person or animal according to any preceding claim in the form of a bed.

15. An arrangement for supporting a person or animal according to any preceding claim provided as a kit of parts.

## Patentansprüche

1. Anordnung zum Stützen einer Person oder eines Tiers, wobei die Anordnung Folgendes umfasst: eine Stützstruktur (1) und eine flexible Membran (11); die Stützstruktur, die mindestens einen ersten Umfangrahmen (2) und einen Ankerbereich (3) umfasst; den Ankerbereich, der bei Gebrauch im Wesentlichen niedriger als besagter erster Umfangrahmen befindlich ist; wobei besagte Membran Abmessungen aufweist, die größer als besagter erster Umfangrahmen sind, und über besagten Rahmen herüber und mindestens teilweise um besagten Rahmen herum gezogen wird, um eine Stützfläche innerhalb des Umfangs des Rahmens zu definieren, wobei mindestens der Bereich (14) der Membran, der besagte Stützfläche definiert, im Wesentlichen durchlässig ist; die Anordnung, die ferner eine Mehrzahl von Haltegurten (15) umfasst, wobei sich jeder Haltegurt zwischen einem Teil von besagtem Ankerbereich und einer jeweiligen Position im Wesentlichen am Rand von besagter Membran erstreckt, um besagte Membran über besagten Rahmen herüber mit genügend Spannung zum Stützen einer Person in Position zu halten, wobei sich mindestens einige von besagten Haltegurten von einem Bereich der Membran zu einem Teil von besagtem Ankerbereich erstrecken, der sich im Wesentlichen unterhalb eines gegenüberliegenden Bereichs der Membran befindet, sodass besagte Haltegurte jeweils unterhalb der Membran verlaufen, **dadurch gekennzeichnet, dass** die Anordnung ferner eine Zwischenstruktur umfasst, die zwischen der Membran und den Haltegurten positioniert ist, um zu verhindern, dass die Membran, wenn nach unten gestreckt, an einen oder mehrere der Haltegurte, die sich diagonal unterhalb der Membran erstrecken, stößt und daran anliegt.

2. Anordnung zum Stützen einer Person oder eines Tiers nach Anspruch 1, wobei besagte Stützstruktur einen zweiten Umfangrahmen (3) umfasst, der besagten Ankerbereich definiert, wobei die Zwischenstruktur ferner in der Form einer zwischen dem ersten und zweiten Umfangrahmen positionierten Rahmenanordnung vorliegt.

3. Anordnung zum Stützen einer Person oder eines Tiers nach Anspruch 1 oder 2, wobei besagte Membran mit Polsterung in Bereichen (13) versehen ist, wo besagte Membran über besagten ersten Umfangrahmen und um ihn herum verläuft.

4. Anordnung zum Stützen einer Person oder eines Tiers nach Anspruch 1 oder 2, wobei besagter erster Umfangrahmen mit Polsterung (13) in Bereichen versehen ist, wo besagte Membran über den ersten Umfangrahmen und um ihn herum verläuft.

5. Anordnung zum Stützen einer Person oder eines Tiers nach einem beliebigen der vorhergehenden Ansprüche, wobei besagter erster Umfangrahmen im Wesentlichen rechteckig ist.

6. Anordnung zum Stützen einer Person oder eines Tiers nach Anspruch 2 oder irgendeinem davon abhängigen Anspruch, wobei besagter erster und zweiter Rahmen durch eine Mehrzahl von Stützpfosten (8) in voneinander beabstandeter Beziehung miteinander verbunden sind.

7. Anordnung zum Stützen einer Person oder eines Tiers nach Anspruch 2 oder irgendeinem davon abhängigen Anspruch, wobei besagter erster und zweiter Rahmen von im Wesentlichen identischer äußerer Form und Größe sind.

8. Anordnung zum Stützen einer Person oder eines Tiers nach einem beliebigen vorhergehenden Anspruch, wobei besagte Haltegurte elastisch sind.

9. Anordnung zum Stützen einer Person oder eines Tiers nach einem beliebigen vorhergehenden Anspruch, wobei einer oder mehrere von besagten Haltegurten mit einer Spannvorrichtung (17) versehen ist oder sind.

10. Anordnung zum Stützen einer Person oder eines Tiers nach Anspruch 9, wobei die oder jede besagte Spannvorrichtung eine Ratschenanordnung (17) umfasst.

11. Anordnung zum Stützen einer Person oder eines Tiers nach Anspruch 9 oder 10, wobei die oder jede besagte Spannvorrichtung eine Schnalle umfasst.

12. Anordnung zum Stützen einer Person oder eines Tiers nach einem beliebigen vorhergehenden Anspruch, wobei besagte Membran elastisch ist.

13. Anordnung zum Stützen einer Person oder eines Tiers nach einem beliebigen vorhergehenden Anspruch, wobei besagte Membran mit einer Mehrzahl von Sicherungsschlaufen (12) zum Anbringen an jeweiligen Haltegurten versehen ist.

14. Anordnung zum Stützen einer Person oder eines Tiers nach einem beliebigen vorhergehenden Anspruch in der Form eines Betts.

15. Anordnung zum Stützen einer Person oder eines Tiers nach einem beliebigen vorhergehenden Anspruch, die als Bausatz bereitgestellt wird.

## Revendications

1. Agencement destiné à soutenir une personne ou un animal, l'agencement comprenant : une structure de soutien (1) et une membrane souple (11) ; la structure de soutien comprenant au moins un premier cadre périphérique (2) et une région de fixation (3) ; la région de fixation étant situé essentiellement plus bas que ledit premier cadre périphérique en utilisation ; ladite membrane ayant des dimensions supérieures à celles dudit premier cadre périphérique et étant étirée sur et au moins en partie autour dudit cadre de manière à définir une surface de soutien dans la périphérie du cadre ; la région (14) de la membrane définissant ladite surface de soutien étant au moins essentiellement perméable ; l'agencement comprenant en outre une pluralité d'attaches (15), chaque attache s'étendant entre une partie de ladite région de fixation et une position respective située essentiellement au bord de ladite membrane de manière à retenir ladite membrane en position sur ledit cadre avec une tension suffisante pour soutenir une personne, au moins une partie des attaches s'étendant d'une région de la membrane à une partie de ladite région de fixation située essentiellement au-dessous d'une région opposée de la membrane de telle sorte que lesdites attaches passent chacune sous la membrane, l'agencement étant **caractérisé en ce qu'**il comprend en outre une structure intermédiaire positionnée entre la membrane et les attaches afin d'empêcher la membrane, lorsqu'elle est étirée vers le bas, de toucher et de s'appuyer contre une ou plusieurs des attaches s'étendant en diagonale sous la membrane.

2. Agencement destiné à soutenir une personne ou un animal selon la revendication 1, dans lequel ladite structure de soutien comprend un deuxième cadre périphérique (3) définissant ladite région de fixation, la structure intermédiaire étant en outre sous la forme d'un agencement de cadre positionné entre les premier et deuxième cadres périphériques.

3. Agencement destiné à soutenir une personne ou un animal selon la revendication 1 ou 2, dans lequel ladite membrane est munie d'un rembourrage (13) dans les régions où ladite membrane passe sur et autour dudit premier cadre périphérique.

4. Agencement destiné à soutenir une personne ou un animal selon la revendication 1 ou 2, dans lequel ledit premier cadre périphérique est muni d'un rembourrage (13) dans les régions où ladite membrane passe sur et autour du premier cadre périphérique.

5. Agencement destiné à soutenir une personne ou un animal selon l'une quelconque des revendications précédentes, dans lequel ledit premier cadre périphérique est essentiellement rectangulaire.

6. Agencement destiné à soutenir une personne ou un animal selon la revendication 2 ou selon l'une quelconque des revendications dépendantes, dans lequel lesdits premier et deuxième cadres sont reliés ensemble de façon espacée l'un par rapport à l'autre par une pluralité de montants de soutien.

7. Agencement destiné à soutenir une personne ou un animal selon la revendication 2 ou selon l'une quelconque des revendications dépendantes, dans lequel lesdits premier et deuxième cadres sont de forme et de taille extérieures essentiellement identiques.

8. Agencement destiné à soutenir une personne ou un animal selon l'une quelconque des revendications précédentes, dans lequel lesdites attaches sont élastiques.

9. Agencement destiné à soutenir une personne ou un animal selon l'une quelconque des revendications précédentes, dans lequel une ou plusieurs desdites attaches sont munies d'un dispositif de tension (17).

10. Agencement destiné à soutenir une personne ou un animal selon la revendication 9, dans lequel le ou chacun des dispositifs de tension comprend un agencement de cliquet (17).

11. Agencement destiné à soutenir une personne ou un animal selon la revendication 9 ou 10, dans lequel le ou chacun des dispositifs de tension comprend une boucle (17).

12. Agencement destiné à soutenir une personne ou un animal selon l'une quelconque des revendications précédentes, dans lequel ladite membrane est élastique.

13. Agencement destiné à soutenir une personne ou un animal selon l'une quelconque des revendications précédentes, dans lequel ladite membrane est munie d'une pluralité de boucles de sécurité (12) destinées à être fixées à des attaches respectives.

14. Agencement destiné à soutenir une personne ou un animal selon l'une quelconque des revendications précédentes, sous la forme d'un lit.

15. Agencement destiné à soutenir une personne ou un animal selon l'une quelconque des revendications précédentes, fourni sous forme d'un kit de pièces.
